Europäisches Patentamt

European Patent Office

Office européen des brevets

(19)

(11) EP 0 927 405 B1

## (12) FASCICULE DE BREVET EUROPEEN

(45) Date de publication et mention
de la délivrance du brevet:
**29.01.2003 Bulletin 2003/05**

(21) Numéro de dépôt: **98925726.6**

(22) Date de dépôt: **15.05.1998**

(51) Int Cl.⁷: **G06T 5/00**

(86) Numéro de dépôt international:
**PCT/FR98/00978**

(87) Numéro de publication internationale:
**WO 98/053426 (26.11.1998 Gazette 1998/47)**

(54) **DISPOSITIF ELECTRONIQUE DE TRAITEMENT D'IMAGES POUR LA DETECTION DE VARIATIONS DIMENSIONNELLES**

**ELEKTRONISCHES BILDVERARBEITUNGSGERÄT ZUR DETEKTION VON DIMENSIONNELLEN ÄNDERUNGEN**

**IMAGE PROCESSING ELECTRONIC DEVICE FOR DETECTING DIMENSIONAL VARIATIONS**

(84) Etats contractants désignés:
**DE GB IT NL**

(30) Priorité: **21.05.1997 FR 9706190**

(43) Date de publication de la demande:
**07.07.1999 Bulletin 1999/27**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
 • **THIRION, Jean-Philippe
  F-06410 Biot (FR)**
 • **CALMON, Guillaume
  F-31300 Toulouse (FR)**

(74) Mandataire: **Plaçais, Jean-Yves et al
Cabinet Netter,
36, avenue Hoche
75008 Paris (FR)**

(56) Documents cités:
 • **RUZENA BAJCSY ET AL: "MULTIRESOLUTION ELASTIC MATCHING" COMPUTER VISION GRAPHICS AND IMAGE PROCESSING, vol. 46, no. 1, avril 1989, pages 1-21, XP000050309**
 • **MOSHFEGHI: "Elastic matching of multimodality medical images" CVGIP GRAPHICAL MODELS AND IMAGE PROCESSING., vol. 53, no. 3, mai 1991, MA US, pages 271-282, XP000200579**
 • **CHENG-CHUNG LIANG ET AL: "DEFORMATION PROCESS MODELING IN MEDICAL IMAGING" EMERGENT INNOVATIONS ON INFORMATION TRANSFER PROCESSING AND DECISIO MAKING, CHICAGO, OCT. 18 - 21, 1992, vol. 2 OF 2, 18 octobre 1992, INSTITUTE OF ELECTRICAL AND ELECTRONICS ENGINEERS, pages 1358-1363, XP000366966**

**Description**

L'invention concerne le domaine du traitement d'images numériques comparables, en vue de la détection (ou détermination) de variations dimensionnelles. Il pourra s'agir d'images "bidimensionnelles" (2D), et dans ce cas la variation sera dite surfacique, ou bien d'images "tridimensionnelles" (3D), et dans ce cas la variation sera dite volumique.

L'invention s'applique plus particulièrement, mais de façon non exclusive, à des images dites médicales, et notamment à l'analyse d'images numériques comparables de régions du cerveau, pour étudier des zones d'intérêt comprenant par exemple des lésions ou des tumeurs ou des structures anatomiques évolutives telles que le coeur ou les ventricules du cerveau. On entend par images comparables des images prises soit sur des régions sensiblement identiques d'un même "objet" à des instants différents, soit sur des régions sensiblement identiques de deux "objets" distincts, soit encore sur une unique image et l'image associée symétrisée par rapport à un plan (ou encore dite "chirale"), lorsque la région analysée présente un certain degré de symétrie. R. Bajcsy et al: "multiresolution elastic matching", Computer vision, graphics and image processing, Vol. 46, no.1, April 1989, pages 1-21, divulgue la superposition d'une image tomographique du cerveau d'un patient avec un atlas 3D du cerveau humain, déformé élastiquement pour correspondre à cette image.

Dans de nombreux domaines, il est très important d'effectuer des analyses comparatives de régions afin de voir leur évolution dans le temps. C'est notamment le cas dans le domaine des soudures de haute précision. Mais c'est encore plus le cas dans le domaine médical où la détection de lésions et/ou le suivi de leur évolution est primordial pour adapter un traitement à un patient ou pour effectuer des tests cliniques, par exemple. On entend par évolution toute modification d'une région, qu'elle soit de type déformation (effet de masse) et/ou de type transformation (modification structurelle sans déformation).

En matière médicale, un jeu de données-image formant une image n-dimensionnelle (nD) est obtenu à l'aide d'appareils tels que les scanners à rayons X ou les appareils de résonance magnétique nucléaire (IRM), ou plus généralement tout type d'appareil capable d'acquérir des images à variation d'intensité. Chaque partie élémentaire d'une région représentée par une image nD est définie par n coordonnées spatiales et une intensité (grandeur mesurée).

Ainsi, dans le cas d'une IRM, l'image 3D d'une région observée est constituée d'une multiplicité de coupes 2D empilées, dans lesquelles les variations d'intensité représentent la densité en proton des tissus.

On connaît déjà des techniques permettant de détecter et/ou d'estimer des variations de volume dans des régions évolutives:

- S.A.Roll, A.C.F.Colchester, L.D.Griffin, P.E.Summers, F.Bello, B.Sharrack, et D.Leibfritz, "Volume estimation of synthetic multiple sclerosis lesions : An evaluation of methods", dans 3rd Annual Meeting of the Society of Magnetic Resonance, p120, Nice, France, Août 1994; et
- C.Roszmanith, H.Handels, S.J.Pöppl, E.Rinast, et H.D.Weiss, "Characterization and classification of brain tumours in three-dimensional MR image sequences", dans Visualization in Biomedical Computing, VBC'96, Hambourg, Allemagne, Septembre 1996.

Ces techniques dites de "segmentation" consistent à délinéer (ou attribuer un contour à) une zone d'intérêt sur deux images d'une région évolutive, espacées temporellement, puis à effectuer la soustraction des "volumes" contenus à l'intérieur des deux contours pour estimer la variation de volume de la zone d'intérêt dans l'intervalle de temps séparant les deux images.

Ces techniques sont particulièrement difficiles à mettre en oeuvre dans le cas des images 3D, du fait de la difficulté rencontrée lors de la délinéation de la zone d'intérêt. De plus, la mesure volumique s'effectue par un dénombrement d'éléments volumiques de référence (voxels), de très petites taille, contenus dans un contour fermé d'une zone d'intérêt, dont la dimension est généralement très grande devant celle d'un voxel. Ce dénombrement ne peut être effectué que par des méthodes (semi-) automatiques comme par exemple celle dite des "serpents 3D" ("3D snakes" en anglais), lesquelles sont difficiles à mettre en oeuvre pour le non spécialiste qu'est généralement le praticien qui effectue l'analyse des images.

Il en résulte que l'incertitude sur la mesure du volume d'une zone d'intérét est très souvent supérieure à la variation de volume estimée, ce qui réduit très notablement l'intérêt de telles mesures volumiques. La précision de ces mesures est encore plus mauvaise lorsque l'homme doit intervenir, car la mesure est alors dépendante de l'observateur.

De plus, les zones d'intérêt sont fréquemment difficiles à détecter du fait que les matériaux qui les constituent ne sont pas toujours bien contrastés dans les images.

La présente invention a donc pour but d'améliorer la situation dans ce domaine du traitement d'images numériques de régions évolutives.

Elle propose à cet effet un dispositif électronique de traitement d'images qui comprend :

- des moyens de recalage permettant de déterminer une transformation de recalage entre l'une des images et l'autre, à partir des deux jeux de données-image,
- des moyens d'échantillonnage opérant d'après ce recalage pour ré-échantillonner un premier des deux jeux de données-image en un troisième jeu de données-image relatif à la même image, et directement superposable échantillon par échantillon au second jeu de données-image, et

- des moyens de traitement qui opèrent à partir des second et troisième jeux de données-image pour en tirer au moins un jeu de données-différence, représentatives de différences entre des zones d'intérêt superposables des images constituées respectivement par lesdits second et troisième jeux de données-image.

Ici, l'expression "différence" doit être prise au sens large, c'est à dire qu'il pourra s'agir d'une apparition d'une nouvelle zone d'intérêt, ou bien d'une modification-transformation d'une zone d'intérêt connue. Plus généralement, tout type de différence entre les deux images est ici concerné.

Selon une autre caractéristique de l'invention, les moyens de traitement comprennent un module de calcul pour déterminer tout d'abord un champ vectoriel de déformation à partir des second et troisième jeux de données-image de manière à permettre la fourniture du jeu de données-différence.

Préférentiellement, les moyens de traitement comprennent de premiers moyens de calcul pour appliquer au champ vectoriel de déformation au moins un premier opérateur de façon à fournir le jeu de données-différence, lequel est alors dit premier jeu de données-différence.

Les moyens de traitement peuvent également comprendre de seconds moyens de calcul pour appliquer au champ vectoriel de déformation un second opérateur, différent du premier opérateur, de façon à fournir un autre jeu de données-différence, lequel est alors dit second jeu de données-différence.

De la sorte, on obtient deux jeux de données-différence comportant des renseignements complémentaires sur les zones d'intérêt.

Les moyens de traitement peuvent en outre comprendre de troisièmes moyens de calcul pour appliquer au champ vectoriel de déformation un troisième opérateur, composition des premier et second opérateurs de façon à fournir un autre jeu de données-différence, lequel est alors dit troisième jeu de données-différence. Cela permet d'obtenir d'autres renseignements sur les zones d'intérêt, complémentaires de ceux obtenus avec un unique opérateur, et de surcroît beaucoup moins bruités, et par conséquent plus précis, du fait que les contributions respectives des "bruits" engendrées par l'application de ces opérateurs sont décorrélés.

Le contraste des zones d'intérêt est par conséquent notablement amélioré, ce qui permet de les détecter plus facilement.

Les premier et second opérateurs sont avantageusement choisis dans un groupe comprenant un opérateur de type norme et un opérateur fondé sur des dérivés partielles, de type divergence ou jacobien, par exemple.

L'opérateur de type norme fournira des informations plus particulièrement représentatives de déplacements, tandis que l'opérateur fondé sur des dérivés partielles fournira des informations plus particulièrement représentatives de croissance ou décroissance (variation volumique ou effet de masse).

Selon encore une autre caractéristique de l'invention, les moyens de traitement peuvent comprendre des moyens de détection pour transformer chaque premier, second et troisième jeu de données-différence en quatrième jeu de données-image formant une carte.

Selon les variantes, les moyens de détection seront agencés, soit pour permettre la sélection manuelle par un utilisateur, à partir de l'une des cartes, des zones d'intérêt, soit pour effectuer une sélection automatique des zones d'intérêt dans l'une de ces cartes.

Dans le cas d'une sélection automatique, il est avantageux que cette sélection soit effectuée par une analyse de type éléments connexes.

Avantageusement, les moyens de détection sont capables de déterminer les contours fermés qui délimitent respectivement des parties des zones d'intérêt sélectionnées. Cette détermination peut s'effectuer par une approximation par des sphères ou par des ellipsoïdes.

Selon encore une autre caractéristique de l'invention, les moyens de traitement peuvent comprendre, séparément, ou en parallèle avec les moyens de détection, des moyens de quantification pour déterminer, à partir du champ vectoriel de déformation et des second et troisième jeux de données-image, des données-volume représentatives de différences de type variation de volume, de façon à former le jeu de données-différence, lequel est dit alors jeu de données-volume.

Cette détermination des variations volumiques en une zone d'intérêt comprend de préférence :

- l'association à un contour fermé, représentatif de la zone d'intérêt, d'un contour de référence englobant ce contour fermé; le contour de référence pourra être sensiblement identique à la forme de la zone d'intérêt, ou bien sphérique, ou bien encore ellipsoïdal,

- la décomposition en éléments, à l'aide d'une distribution de points, de l'espace contenu dans le contour de référence; cette décomposition de l'espace peut être faite à l'aide d'une distribution de points régulière, formant un maillage, ou bien de manière stochastique à l'aide d'une distribution de points aléatoire,

- le dénombrement des éléments contenus à l'intérieur du contour fermé de la zone d'intérêt,

- l'application à cette distribution de points du champ vectoriel de déformation, sans déformer le contour fermé de la zone d'intérêt,

- le dénombrement des éléments restants à l'intérieur du contour fermé de la zone d'intérêt, et

- la soustraction des deux nombres d'éléments de façon à déterminer les données-image du jeu de données-volume représentatives des variations volumiques de la zone d'intérêt.

De préférence, les moyens de quantification calculent, en chaque zone d'intérêt, une multiplicité de variations volumiques de la zone d'intérêt sélectionnée, pour des contours de référence fermés et emboîtés les uns dans les autres, et compris entre le contour assimilable à un point de dimension nulle et le contour de référence, puis déterminent parmi cette multiplicité de variations volumiques celle qui est la plus probable. Cela permet d'améliorer encore la précision du calcul de variation volumique.

Lorsque les moyens de traitement comprennent à la fois des moyens de quantification et des moyens de détection, il est particulièrement avantageux que les moyens de quantification opèrent sur des contours fermés déterminés par les moyens de détection dans les zones d'intérêt sélectionnées par ces derniers. Cela permet de réduire très notablement le temps de traitement, sans pour autant diminuer la qualité et la précision des résultats obtenus, car il n'est pas nécessaire d'effectuer la quantification partout dans l'image.

Par ailleurs, lorsque le dispositif ne comprend pas de moyens de détection, on peut prévoir des moyens de segmentation destinés à fournir au module de quantification les zones d'intérêt, à partir du second jeu de données-image.

L'invention s'applique tout particulièrement aux images numériques médicales, et plus particulièrement encore aux images médicales tridimensionnelles de régions d'un être vivant (animal ou humain), lesquelles régions comprennent des zones d'intérêt comportant des lésions ou des tumeurs évolutives ou non, ou bien des structures anatomiques évolutives telles que le coeur ou les ventricules du cerveau. La seconde image pourra être déduite de la première image par une symétrie par rapport à un plan.

L'invention propose également un procédé de traitement d'images numériques comparables, comprenant les étapes suivantes :

- déterminer une transformation de recalage entre l'une des images et l'autre, à partir des deux jeux de données-image,
- ré-échantillonner un premier des deux jeux de données-image, représentatif de l'image recalée, en un troisième jeu de données-image relatif à la même image et directement superposable échantillon par échantillon au second jeu de données-image,
- déterminer à partir des second et troisième jeux de données-image au moins un jeu de données-différence représentatives de différences entre des zones superposables des images constituées respectivement par lesdits second et troisième jeux de données-image.

D'autres caractéristiques et avantages de l'invention apparaî-tront à l'examen de la description détaillée qui va suivre, ainsi que des dessins annexés, sur lesquels :

- les figures 1A et 1B sont deux vues en coupe d'une même région d'un cerveau humain atteint d'une lésion évolutive, obtenues à des instants différents;

- les figures 2A à 2D sont des images traitées matérialisant une zone d'intérêt de la figure 1A, rapportée à sa position dans cette image 1A, après soustraction des images 1A et 1B, après application au champ vectoriel de déformation d'un premier opérateur de type norme, après application au champ vectoriel de déformation d'un second opérateur de type divergence, et après application au champ vectoriel de déformation d'un troisième opérateur produit des premier et second opérateurs;

- les figures 3A et 3B illustrent schématiquement une zone d'intérêt avant et après une évolution de type déformation centrale avec changement d'intensité;

- les figures 4A et 4B illustrent schématiquement une zone d'intérêt avant et après une évolution de type déformation diffuse sans changement d'intensité;

- les figures 5A et 5B illustrent schématiquement une zone d'intérêt avant et après une évolution de type transformation sans déplacement, mais avec variation d'intensité;

- la figure 6 est un mécanisme illustrant le fonctionnement général du dispositif;

- la figure 7 est un mécanisme illustrant un fonctionnement du module de détection du dispositif;

- la figure 8 illustre un exemple graphique de calcul de variation de volume dans le cas d'une distribution de points de type maillage;

- la figure 9 illustre un exemple bidimensionnel (2D) de famille de formes fermées et emboîtées; et

- la figure 10 illustre un exemple tridimensionnel (3D) de champ vectoriel de déformation; et

- la figure 11 est un diagramme représentant l'estimation de la variation volumique d'une lésion en fonction du rayon d'une sphère de référence qui l'englobe.

Les dessins sont, pour l'essentiel, de caractère certain. En conséquence, ils font partie intégrante de la présente description. Ils pourront donc non seulement servir à mieux faire comprendre l'invention, mais aussi contribuer à la définition de celle-ci.

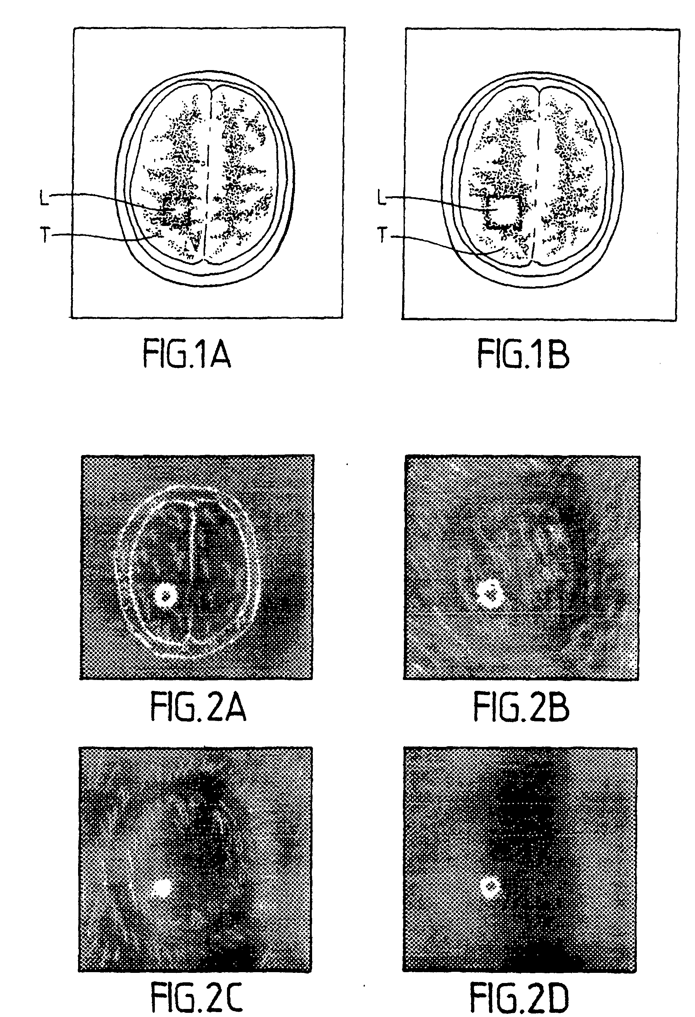

Dans ce qui suit, on fera référence à un traitement d'images numériques médicales, et plus particulièrement, mais seulement à titre d'exemple, à des images de régions du cerveau du type de celles illustrées partiellement sur les figures 1A et 1B, lesquelles ont été obtenues sur un même sujet humain à deux mois d'intervalle environ.

On appellera première image l'image de la figure 1B, et seconde image l'image de la figure 1A. Sur ces deux images se trouve encadrée en pointillé une zone dite d'intérêt contenant une lésion évolutive induite par une maladie de type sclérose en plaques.

Les figures 1A et 1B représentent en fait une partie bidimensionnelle (2D) d'une image tridimensionnelle (3D) d'une région du cerveau, les autres parties formant avec la partie 2D illustrée un empilement de coupes 2D d'image. De telles coupes peuvent être obtenues, notamment, par imagerie par résonance magnétique (IRM). Chaque tranche d'image constitue en fait une carte d'intensité représentative de la densité de proton des constituants de la région, ici des tissus et des lésions.

Une image tridimensionnelle est par conséquent constituée d'un jeu de données-image numériques, chaque donnée-image représentant la position d'un voxel d'image par rapport à un repère tridimensionnel, et l'intensité de ce voxel, laquelle est généralement comprise entre les valeurs 0 et 1. En fait, pour être plus précis, les données-image forment une liste (ou tableau) ordonnée, et la position de la donnée dans cette liste fournit implicitement les coordonnées de position.

Le dispositif selon l'invention est adapté pour traiter de tels jeux de données-image représentatifs respectivement d'images numériques comparables. On entend ici par comparables des images d'une même région prises à des instants différents. Mais, dans d'autres applications de traitement d'images, il pourrait s'agir d'images de régions identiques de patients différents, ou bien d'objets différents, ou bien encore d'une première image d'une région présentant un certain degré de symétrie et d'une seconde image "symétrisée" (ou chirale).

Le dispositif selon l'invention a pour principal objet de traiter deux jeux de données-image représentant deux images numériques dont l'une au moins contient au moins une zone d'intérêt comportant au moins une structure évolutive, de façon à quantifier les différences qui pourraient exister entre les deux images.

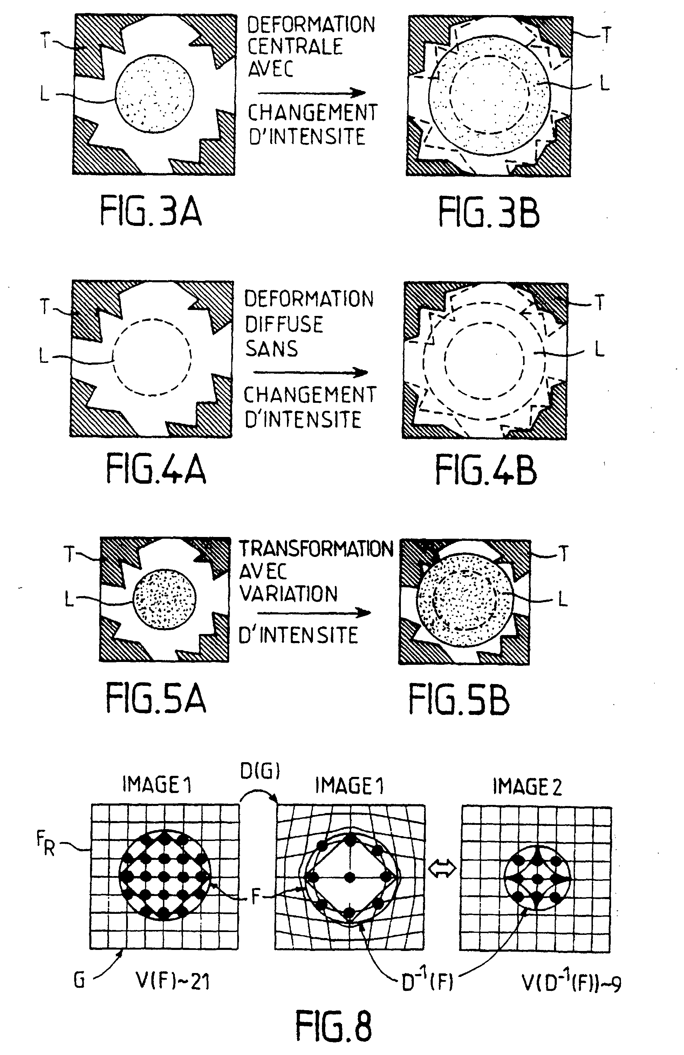

Comme cela est illustré schématiquement sur les figures 3 à 5, les modifications qui peuvent apparaître en une zone "évolutive" peuvent être de plusieurs types. Il peut s'agir (voir figures 3A et 3B) d'une modification de type déformation centrale avec changement d'intensité. Dans ce cas, la zone d'intérêt comprend des tissus sains T au centre desquels se trouve une lésion L dont le volume croit, ou bien décroît, au cours du temps, entraînant ainsi un déplacement des tissus. La modification peut également être de type déformation diffuse sans changement d'intensité. Dans ce cas, comme cela est illustré sur les figures 4A et 4B, la lésion L qui se trouve placée au centre de tissus sains T n'est pas visible, et seuls des déplacements des tissus qui l'entourent permettent de déceler sa présence. La modification peut encore être de type transformation sans déplacement, mais avec changement d'intensité, comme cela est illustré sur les figures 5A et 5B. Dans ce cas, la lésion visible ou non qui se trouve au centre des tissus sains T croît ou décroît sans entraîner de déplacement desdits tissus sains. Bien entendu, des combinaisons de ces différents types de modifications peuvent également survenir.

Le dispositif selon l'invention comprend, dans le but de traiter les premier et second jeux de données-image, un certain nombre de modules qui coopèrent les uns avec les autres.

Un module de recalage 10 est chargé de recevoir les premier et second jeux de données-image afin de déterminer une transformation de recalage dit "rigide" $T_R$ entre les première et seconde images. Le recalage rigide est décrit notamment dans la Demande de Brevet 92 03900 du Demandeur, ainsi que dans la publication "New feature points based on geometric invariance for 3D image registration", dans International Journal of Computer Vision, 18(2), pp 121-137, mai 1996, de J-P. Thirion.

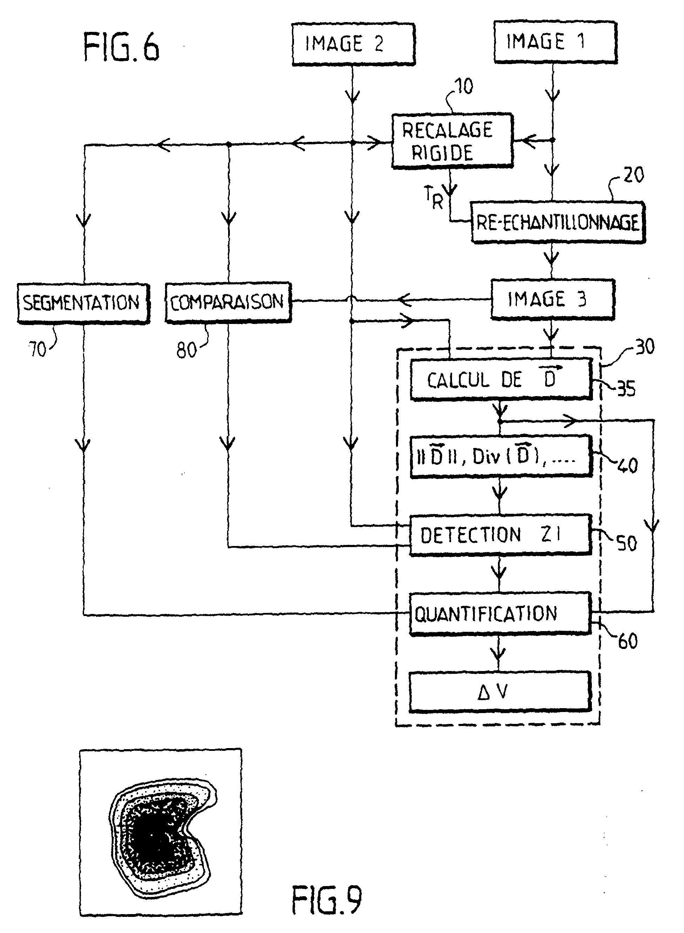

Cette opération de recalage rigide permet d'obtenir une première superposition des deux images initiales d'une précision pouvant atteindre un dixième d'élément de volume (ou voxel) d'image. Dans l'exemple illustré sur la figure 6, la transformation de recalage $T_R$ permet de passer de l'image 1 de la figure 1B à l'image 2 de la figure 1A (laquelle sert ici d'image de référence).

La transformation de recalage appliquée à l'image 1 alimente alors un module d'échantillonnage 20 destiné à ré-échantillonner l'image 1 traitée par la transformation de recalage $T_R$ de façon à former un troisième jeu de données-image représentatif d'une troisième image exactement superposable, échantillon par échantillon, à la seconde image (image de référence). Bien évidemment, cette superposition est effective partout sauf dans les zones ayant subi une évolution (ou transformation) d'une image à l'autre (c'est-à-dire, ici, les zones d'intérêt comprenant des lésions).

Les second et troisième jeux de données-image, représentatifs respectivement de la seconde image et de la première image traitée par le recalage et le ré-échantillonnage (ou troisième image), sont adressés à un module de traitement 30, et plus précisément à un module de calcul de champ de déformation 35 que ledit module de traitement 30 comprend. On leur applique tout d'abord un traitement de déformation dit "non rigide", lequel est décrit notamment dans la publication "Non rigid machine using demons", dans Computer Vision and Pattern Recognition, CVPR'96, San Francisco, Californie, USA, juin 1996, de J-P. Thirion.

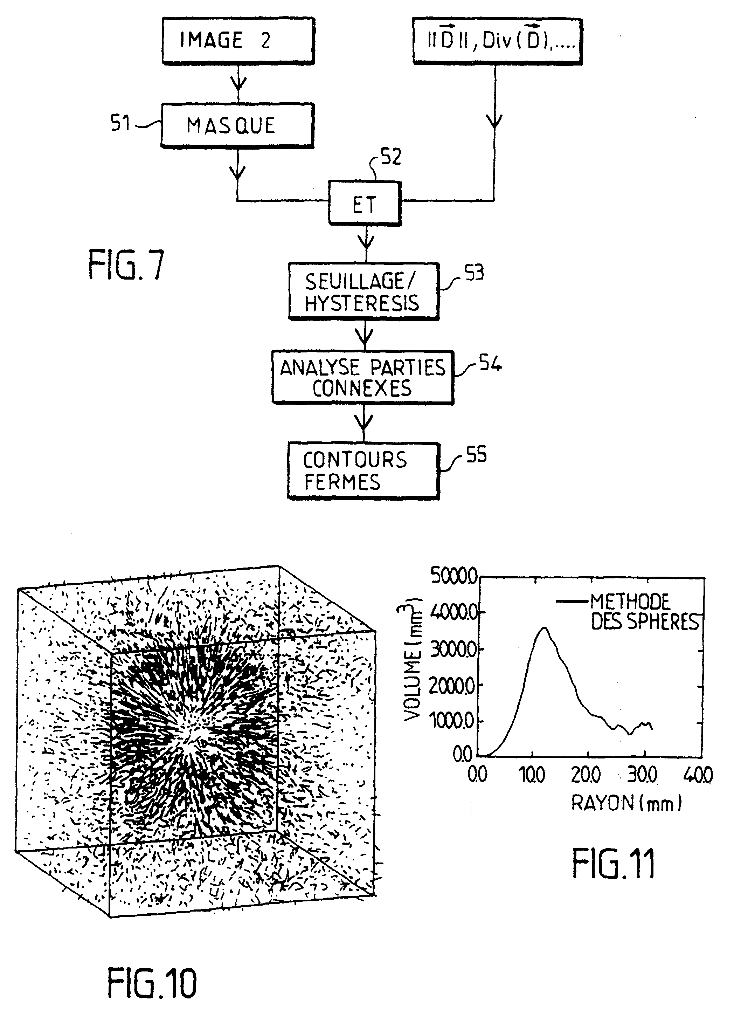

Cette technique ressemble à la technique du flot optique, lorsque les déformations considérées sont très petites. Elle permet de déterminer un champ vectoriel de déformation $\vec{D}$ représentant la distribution vectorielle de déplacement (3D), lors du passage de la seconde image à la troisième image (transformée de la première image), rapportée à chaque élément d'image ou voxel de la seconde image. Un exemple de champ vectoriel de déformation $\vec{D}$ est illustré sur la figure 10.

Ce champ vectoriel de déformation $\vec{D}$ indique donc, à l'aide d'un vecteur pour chaque voxel d'image, le sens et la direction de déplacement du voxel, ainsi que la variation d'intensité subie par ce voxel associé audit vecteur, lorsque l'on considère son passage de l'image 3 (transformée de l'image 1) vers l'image 2 (image de référence), rapportée à cette même image 2.

Le champ vectoriel de déformation $\vec{D}$ déterminé par le module 35 est utilisé par un module de quantification 60 destiné à déterminer les variations volumiques des zones d'intérêt des images, et de préférence intégré au module de traitement 30. Le traitement qu'il effectue pour ce faire va être expliqué en référence, plus particulièrement, à la figure 8.

La quantification opérée par le module de quantification 60 consiste tout d'abord à englober la lésion évolutive, contenue dans une zone d'intérêt, à l'intérieur d'une forme de référence $F_R$ délimitée par un contour de référence qui peut être soit d'une forme similaire à celle F de la lésion évolutive délimitée par un contour fermé (dont le calcul sera précisé plus loin), qui pourra prendre tout type de forme, comme par exemple une forme similaire à celle de la lésion évolutive, ou bien ellipsoïdale, ou bien encore de forme sphérique ou cubique (comme illustré sur la figure 8).

Le contour fermé comme le contour de référence sont des surfaces topologiquement fermées et orientées, ou en d'autres termes possédant un intérieur au sens mathématique du terme (la forme F de la lésion évolutive) et un extérieur. Par ailleurs, le champ vectoriel de déformation $\vec{D}$ est supposé continu et bijectif.

Dans la suite, pour des raisons de commodité, on appellera $D_{2,1}$ le champ vectoriel de déformation $\vec{D}$ permettant de passer de l'image 2 à l'image 1 (par l'intermédiaire de sa transformée (image 3)).

On note $F_1$ et $F_2$ les formes respectives des lésions évolutives dans les première et seconde images. $F_1$ et $F_2$ appartiennent au même espace E que $D_{2,1}$. On a donc la relation suivante : $F_1 = D_{2,1} (F_2)$, ce qui veut dire que la forme $F_1$ de la lésion évolutive de la première image est égale à la transformée par le champ vectoriel de déformation $D_{2,1}$ de la forme $F_2$ de la même lésion évolutive de la seconde image (image de référence).

La forme de référence $F_R$ qui est déterminée par le module de quantification 60 est choisie telle que $F_1 \subset F_R$ et $F_2 \subset F_R$. Le volume $V_R$ de la forme de référence $F_R$ est connu, puisqu'il a été attribué par le module de quantification 60.

Pour déterminer la variation de volume $\Delta V$ entre les formes $F_2$ et $F_1$, il est nécessaire de déterminer les volumes respectifs $V_1$ et $V_2$ des lésions évolutives de forme $F_1$ et $F_2$.

Le volume $V_2$ peut être avantageusement évalué par une méthode stochastique de type Monte Carlo, laquelle consiste à tirer $N_R$ points de façon aléatoire à l'intérieur de la forme $F_R$, pour une densité de distribution constante.

On mesure alors $N_2$, qui est le nombre de points tombant à l'intérieur de la forme $F_2$, et l'on obtient la relation :

$$V_2 = V(F_2) \simeq (N_2/N_R) \times V_R$$

Ici, le signe "$\simeq$" veut dire que $(N_2/N_R) \times V_R$ tend vers $V_2$ lorsque $N_R$ tend vers l'infini.

De même, on mesure le nombre de points $N_1$ qui tombent à l'intérieur de la forme $F_1$, et l'on obtient :

$$V_1 = V (F_1) \simeq (N_1/N_R) \times V_R$$

Or, soit un point P appartenant à la forme de référence $F_R$, ce point P appartient à la première forme $F_1$ si et seulement si la transformée dudit point P par le champ vectoriel de déformation $D_{1,2}$ (égal à $D^{-1}{}_{2,1}$) appartient à la transformée par ce même champ vectoriel de déformation $\vec{D}_{1,2}$ de la première forme $F_1$, laquelle est égale à la seconde forme $F_2$. On a la relation suivante :

$$P \in F_1 \Leftrightarrow D_{1,2}(P) \in D_{1,2}(F_1) = F_2.$$

Cette relation est rendue possible du fait que le champ vectoriel de déformation $D_{2,1}$ est continu et bijectif ou, en d'autres termes que : $D_{1,2}$ est égal à $D^{-1}{}_{2,1}$.

En conséquence, le nombre $N_1$ de points qui tombent à l'intérieur de la forme $F_1$ est égal au nombre de points tirés de manière aléatoire à l'intérieur de la forme de référence $F_R$ vérifiant la relation $D_{1,2}(P) \in F_2$.

Le Demandeur a remarqué qu'il était plus avantageux d'utiliser cette dernière propriété pour évaluer $N_1$, car il suffit de déterminer une seule forme $F_2$, et non pas deux formes $F_1$ et $F_2$.

On en déduit alors la variation de volume $\Delta V$ de la lésion évolutive observée sur les première (troisième) et seconde images :

$$\Delta V = V_1 - V_2 = (N_1 - N_2) \times V_R/N_R$$

Dans la formule ci-dessus, il est possible de remplacer le rapport $V_R/N_R$ par la densité de distribution constante d de points contenus dans $F_R$, laquelle est sensiblement équivalente audit rapport $V_R/N_R$.

Comme cela est illustré sur la figure 8, au lieu d'une distribution de points de type aléatoire (ou stochastique), il est possible de prendre une distribution régulière formant une grille G définie dans l'espace E. Bien entendu, il n'est pas obligatoire que la maille élémentaire de la grille G soit de type cubique comme cela est illustré sur la figure 8. Tout type de maillage peut être envisagé.

Pour un maillage régulier, la valeur de la variation de volume $\Delta V$ tend vers la vraie valeur lorsque la résolution de la grille (le volume de sa maille) tend vers la valeur 0.

Dans la pratique, le champ de déformation $D_{1,2}$ n'est pas toujours continu, mais sa représentation peut être discrétisée ($D^-_{1,2}$). Dans un tel cas, seules sont disponibles les coordonnées des éléments de volume qui correspondent à des points d'une grille régulière G, soient les points $D^-_{1,2}(G)$.

Dans ces conditions :

- $V_R \simeq$ au nombre de points de la grille régulière G qui tombent à l'intérieur de la forme de référence $F_R$, multiplié par le volume de la maille;

- $V_2 \simeq$ au nombre de points de la grille régulière G qui tombent à l'intérieur de la seconde forme $F_2$, multiplié par le volume de la maille; et

- $V_1 \simeq$ au nombre de points de $D^-_{1,2}(G)$ qui tombent à l'intérieur de la seconde forme $F_2$, multiplié par le volume de la maille.

Dans le cas d'une représentation discrétisée $D^-_{1,2}(G)$ du champ de déformation, il est également possible d'utiliser une distribution stochastique de points $P_i$ dont les coordonnées sont flottantes dans l'espace E. Il suffit alors, pour évaluer $D_{1,2}(P_i)$, d'utiliser le champ discrétisé $D^~_{1,2}$ et une interpolation de type n-linéaire du champ discret, à l'intérieur de la maille G dans laquelle tombe le point $P_i$. Dans cette maille i, le point $P_i$ possède des coordonnées $\alpha_i$, $\beta_i$ et $\gamma_i$, toutes comprises entre 0 et 1 (valeurs incluses). L'interpolation sera 2-linéaire dans le cas d'une image 2D et 3-linéaire dans le cas d'une image 3D.

En résumé, la quantification consiste à effectuer les étapes suivantes (voir la figure 8) :

- tout d'abord associer à un contour fermé, représentatif d'une lésion évolutive d'une zone d'intérêt un contour de référence $F_R$ (carré dans l'exemple de la figure 8) qui englobe le contour fermé F,
- puis, à l'aide d'une distribution de points qui peut être stochastique ou régulière, décomposer en éléments simples (par exemple en mailles) l'espace contenu dans le contour de référence $F_R$;
- dénombrer ensuite les mailles (ou éléments, ou noeuds de maille) qui sont contenues à l'intérieur du contour fermé F de la zone d'intérêt;
- puis, appliquer à la distribution de points (ici la grille de mailles cubiques) le champ vectoriel de déformation $D_{1,2}$ sans déformer le contour fermé F;
- dénombrer ensuite les mailles (ou éléments, ou noeuds) restant à l'intérieur du contour fermé F;
- puis effectuer la soustraction entre les deux nombres de mailles (ou éléments, ou noeuds) ainsi déterminés de façon à déterminer la variation volumique de la lésion évolutive de la zone d'intérêt analysée.

Dans l'exemple illustré sur la figure 8, le nombre de noeuds de mailles cubiques compris à l'intérieur de la sphère F formant le contour fermé est égal à environ 21 avant l'application du champ de déformation $\vec{D}$, et ce nombre de noeuds n'est plus qu'égal à environ 9 après application de ce même champ de déformation $\vec{D}$.

Les variations volumiques ainsi déterminées forment un jeu de données-différence, dans lequel les différences sont des variations volumiques; le jeu est alors dit "jeu de données-volume". Ce jeu peut être mis en forme de jeu de données-image en vue de sa visualisation sur une carte d'intensité, par exemple, rapportées à la seconde image; les différences d'intensité représentant les amplitudes de variation de volume.

Selon l'invention, il est possible d'améliorer le calcul de la variation volumique d'une zone d'intérêt. Pour ce faire, le module de quantification 60 peut être agencé pour calculer des variations de volume $\Delta i$ pour toute une famille de formes fermées et emboîtées i comprises entre un volume nul (assimilable à un point géométrique) et le volume $V_R$ de la forme de référence $F_R$ qui englobe un contour fermé d'une zone d'intérêt (voir figure 9). On compte pour chaque forme de la famille le nombre de mailles (ou éléments) qui tombent entre deux surfaces i et i + 1 successives, lesquelles délimitent une "coquille". Puis, on somme les contributions des coquilles comme suit :

$$N_G^i = \Sigma_1^i \, C_G^i$$

$$N_G^{i+1} = N_G^i + C_G^{i+1}$$

A partir d'une forme F on peut calculer une carte de distance par exemple à l'aide de la méthode du chanfrein, ou par lissage gaussien, et ensuite définir un jeu de formes fermées et emboîtées sous la forme d'iso-surfaces définies à partir de la carte de distance.

Cela fournit une courbe de variation de volume du type de celle qui est représentée sur la figure 11. Le maximum de cette courbe fournit la valeur la plus probable de la variation de volume de la lésion évolutive analysée. Cela permet d'améliorer la précision et la robustesse de cette mesure de variation de volume.

Dans la description qui précède, on a effectué un calcul de variation de volume à partir, notamment, du contour fermé d'une lésion. Ce contour fermé de lésion peut être déterminé de trois façons, soit par un module de segmentation 70 manuelle ou automatique, soit directement par le module de quantification 60, soit par un module de détection 50 à partir de données-différences fournies par un module de calcul 40.

Les méthodes de segmentation sont bien connues de l'homme de l'art. Un exemple d'une telle méthode est décrite par exemple dans la publication de Isaac COHEN, Laurent COHEN, et Nicholas AYACHE, "using deformable surfaces to segment 3D images and infer differential structures", dans CVGIP: Image understanding '92, septembre 1992. Cette méthode consiste à déterminer des zones d'intérêt directement à partir de la seconde image. Dans le diagramme illustré sur la figure 6, lorsque l'on n'utilise pas de module de détection 50, le module de quantification 60 est alimenté par le module de calcul du champ de déformation 35 et par le module de segmentation 70 qui fournit les zones d'intérêt dans lesquelles la quantification doit être effectuée. Ce module de segmentation 70 peut être intégré dans le module de traitement 30.

Le module de calcul 40 est destiné à transformer le champ vectoriel de déformation $\vec{D}$, fourni par le module de détermination du champ de déformation 35, en au moins un jeu de données-différence, de préférence par application d'au moins un premier opérateur.

Préférentiellement, mais cela n'est en aucune façon obligatoire, le module de calcul 40 applique en parallèle deux opérateurs au champ vectoriel de déformation $\vec{D}$ pour déterminer un premier et un second jeux de données-différence. Préférentiellement les premier et second opérateurs sont choisis dans un groupe comprenant un opérateur de type norme et un opérateur fondé sur des dérivés partielles. Ainsi, le premier opérateur peut être de type norme ($\| \; \|$) tandis que le second opérateur est fondé sur des dérivées partielles.

L'opérateur norme consiste à transformer les vecteurs représentatifs du champ $\vec{D}$ en des intensités $\|\vec{D}\|$ rapportées à la seconde image, de façon à former un premier jeu de données-différence qui peut être ensuite transformé en un premier "quatrième" jeu de données-image, formant une carte d'intensité représentative des modifications de type déplacement de tissus.

L'opérateur fondé sur des dérivées partielles est de préférence de type divergence (Div), mais il peut également s'agir d'un jacobien. L'application d'un tel opérateur au champ vectoriel de déformation $\vec{D}$ permet de transformer les vecteurs représentatifs du champ $\vec{D}$ en des intensités Div $\vec{D}$ rapportées à la seconde image, de façon à former un second jeu de données-différence qui peut être ensuite transformé en un second "quatrième" jeu de données-image, formant une autre carte d'intensité représentative des modifications de type variation de volume. Lorsque le second opérateur est de type divergence, le signe de la divergence du champ $\vec{D}$ (Div

$\vec{D}$) en un point donné permet d'indiquer si la lésion est dans une phase de croissance ou dans une phase de décroissance.

Le Demandeur s'est également aperçu, notamment dans la caractérisation des lésions induites par la sclérose en plaques, qu'il était avantageux d'appliquer à $\vec{D}$, un troisième opérateur, composition des premier et second opérateurs. En d'autres termes, il est particulièrement intéressant que le module de calcul 40 du module de traitement 30 effectue le produit de la norme du champ vectoriel de déformation $\vec{D}$ et de la divergence de ce même champ $\vec{D}$ vectoriel, soit $\|\vec{D}\|$ * (Div $\vec{D}$). Le résultat de l'application de ce troisième opérateur fournit un troisième jeu de données-différence qui peut être ensuite transformé en un troisième "quatrième" jeu de données-image, formant encore une autre carte d'intensité représentative, pour chaque voxel rapporté à la seconde image, à la fois des zones à déplacement et des zones à variation de volume, représentatives de variations de volume.

De plus, étant donné que les bruits numériques respectifs des premier et second jeux de données-différence, obtenus par application des premier et second opérateurs, sont généralement décorrélés, la composition de leurs données-différence permet de supprimer presque totalement le bruit. Cela permet d'améliorer très notablement le contraste de la carte d'intensité, par rapport à celui obtenu par application soit du premier opérateur seul, soit du second opérateur seul.

Le dispositif selon l'invention peut également comprendre un module de comparaison 80, dépendant ou non du module de traitement 30, pour fournir un autre jeu de données-différence à partir de la soustraction des second et troisième jeux de données-image. Cet autre jeu peut également donner une carte d'intensité représentative des différences, au sens premier du mot, entre les images 2 et 3.

On a représenté sur les figures 2A à 2D, à titre de comparaison, les différentes cartes-image d'intensité obtenues par une soustraction directe des second et troisième jeux de données-image, après application au champ $\vec{D}$ d'un premier opérateur de type norme, après application au champ vectoriel de déformation d'un second opérateur de type divergence, et après application à ce même champ $\vec{D}$ d'un troisième opérateur produit des premier et second opérateurs.

Ces quatre cartes-image d'intensité obtenues à partir de quatrièmes jeux de données-image différents permettent d'obtenir des renseignements sensiblement complémentaires, et par conséquent de mieux visualiser et/ou caractériser les zones d'intérêt comportant des lésions évolutives ou non.

Il est clair que les transformations du champ $\vec{D}$ en jeu de données-différence, puis en quatrième jeu de données-image a pour but de permettre la visualisation, sur un écran vidéo, ou un terminal, de station de travail, des différences (au sens large du mot) entre les images (encore appelées zones d'intérêt), lorsque le dispositif selon l'invention y est incorporé. Cette incorporation peut être faite, par exemple, dans la mémoire de masse gérée par le système d'exploitation de la station de travail que pilote un technicien ou un praticien.

A partir de l'un au moins des quatrièmes jeux de données-image, ou plus directement du jeu de données-différence correspondant, le dispositif va permettre de déterminer les contours fermés des lésions contenues dans les zones d'intérêt.

La détection peut être soit automatique, soit manuelle (intervention d'un technicien ou du praticien intéressé par les images). Il est clair que dans le cas manuel, la détection-sélection ne peut s'effectuer qu'à partir de la visualisation d'une carte-intensité (quatrième jeu de données-image). Dans un cas comme dans l'autre, la détection est rendue possible par un module de détection de zones d'intérêt 50 qui fait partie du module de traitement 30.

Lorsque c'est le technicien qui sélectionne manuellement les zones d'intérêt, on peut prévoir une interface utilisateur, comme par exemple une souris, pour lui faciliter la sélection à partir des images du champ vectoriel de déformation $\vec{D}$ traité et des seconde et troisième images. Le dispositif selon l'invention, et plus particulièrement son module de détection 50 est alors capables de déterminer le contour fermé de la lésion contenue dans la ou les zones d'intérêt sélectionnées. Selon les variantes, la forme du contour fermé est soit similaire à celle de la lésion évolutive à l'intérieur de la zone d'intérêt, soit de forme ellipsoïdale, soit encore de forme sphérique.

Il est clair que, dans le cas d'images tridimensionnelles, même si la sélection d'une zone d'intérêt s'effectue sur l'une des images bidimensionnelles de la région tridimensionnelle analysée, le module de détection 50 est agencé pour aller rechercher dans les images bidimensionnelles voisines de l'empilement tridimensionnel, formant l'image 3D, les parties comprenant la lésion évolutive.

Dans le cas d'une sélection automatique, c'est le module de détection 50 qui détermine les différentes zones d'intérêt et qui, par conséquent, détermine un contour fermé pour chaque lésion évolutive qu'elles contiennent respectivement, tout comme dans la procédure manuelle.

De préférence, cette détection automatique des zones d'intérêt s'effectue à l'aide d'une technique dite par éléments connexes (ou recherche de parties connexes), bien connue de l'homme de l'art.

Plus précisément (voir figure 7), la sélection-détermination des zones d'intérêt comprend tout d'abord la réalisation d'un masque 51 à partir de la seconde image (image de référence), et la combinaison de ce masque, par une opération logique de type "ET" 52 à l'un des jeux de données-différence résultant de l'application au champ vectoriel de déformation $\vec{D}$ de l'un au moins des opérateurs. Le résultat de cette opération logique entre un jeu de données-différence (ou le quatrième jeu de données-image associé) et le masque de la seconde image donne une image dite masquée qui permet la localisation, dans le masque de la seconde image, des zones de différences déterminées par l'application du ou des opérateurs au champ de déformation. Il s'agit donc d'une procédure tendant à permettre la localisation des différentes zones de différences (ou zones d'intérêt) relativement à la seconde image. Dans le cas des images du cerveau, et plus particulièrement de la sclérose en plaques, le masque pourra correspondre, par exemple, à la matière blanche du cerveau.

Les données constituant cette image masquée sont ensuite soumises à un traitement 53 dit de seuillage par hystérésis permettant de garder dans l'image masquée toutes les composantes connexes supérieures à un premier seuil minimal choisi et contenant au moins un point d'intensité supérieure à un second seuil, supérieur au premier seuil. Cela permet de réduire le bruit électronique de cette image masquée.

Une fois l'image masquée "débruitée", on effectue une recherche des parties connexes qu'elle contient 54, de façon à déterminer les formes des lésions contenues dans les zones d'intérêt, ou bien une forme approchée sphérique ou ellipsoïdale à partir d'un calcul de moments d'ordre 0 ou d'ordre 1. Les contours fermés de chaque lésion évolutive et leur localisation relativement à la seconde image sont alors adressés au module de quantification 60, bien entendu lorsque le dispositif en comprend un, de sorte que la quantification ne soit effectuée qu'à partir de données correspondant aux zones d'intérêt et plus particulièrement aux contours fermés contenus dans celles-ci.

Il est clair que le dispositif selon l'invention peut fonctionner sans les modules de calcul 40 et de détection 50. En effet, la détection des zones d'intérêt a pour principal but d'éviter que la quantification des variations volumiques soit effectuée sur la totalité d'un jeu de données-différence. Ainsi, la quantification n'est effectuée que sur une ou plusieurs parties (ou zones d'intérêt) des jeux de données-image (seconde et troisième). Cela permet de réduire très notablement le temps de traitement de quantification, sans pour autant diminuer la qualité et la précision des résultats obtenus.

De même, en l'absence des modules de calcul 40 et de détection 50 ou du module de segmentation 70, les zones d'intérêt peuvent être obtenues par le module de quantification 60 à partir de la seconde image. Pour ce faire, on effectue pour chaque voxel de la seconde image une quantification à l'aide d'une sphère d'un rayon donné centré sur ledit voxel, puis on attribue la valeur de variation de volume ainsi mesurée (donnée-image) au voxel correspondant d'une nouvelle image.

Le dispositif selon l'invention peut être implanté dans une mémoire, par exemple de masse, d'une station de travail, sous la forme d'un logiciel.

A toute fin utile, il est précisé que des éléments descriptifs plus détaillés ont été déposés le 11 février 1997 sous pli confidentiel à la Société des Gens de Lettres sous la référence n° 1997.02.0216/00216, Ce document intitulé "Deformation analysis to detect and quantify active lesions in 3D medical image sequences", Rapport de recherches N°3102 de l'INRIA, février 1997, auteurs Jean-Philippe Thirion et Guillaume Calmon, sera rendu public après dépôt de la présente Demande de Brevet.

L'invention ne se limite pas au mode de réalisation décrit ci-avant, mais elle englobe toutes les variantes que pourra développer l'homme de l'art dans le cadre des revendications ci-après.

Ainsi, on a décrit dans ce qui précède un traitement de deux images médicales obtenues à des instants différents. Mais, le traitement peut tout aussi bien s'appliquer à des images d'un autre domaine, comme par exemple celui des soudures de haute précision. Par ailleurs, le traitement peut également être effectué à partir d'une première image et de son image symétrisée par rapport à un plan, lorsque la première image est suffisamment symétrique pour ce faire.

Par ailleurs, on a décrit un dispositif comprenant à la fois des moyens de calcul et détection et des moyens de quantification. Mais il est clair, qu'un dispositif selon l'invention peut ne comprendre que des moyens de calcul (application d'un ou plusieurs opérateurs), ou bien que des moyens de calcul et des moyens de détection, ou bien encore que des moyens de quantification.

Enfin, on a décrit un dispositif dans lequel les moyens de traitement calculent un champ vectoriel de déformation à partir des second et troisième jeux de données-image de manière à déterminer un jeu de données-différence. Mais il est clair que l'on pourrait calculer un autre champ vectoriel, différent d'un champ de déformation.

## Revendications

1. Dispositif électronique de traitement d'images, destiné à recevoir deux jeux de données-image représentant respectivement deux images numériques comparables, comprenant

   - des moyens de recalage (10) propres, à partir de ces deux jeux de données-image, à déterminer une transformation de recalage ($T_R$) entre l'une des images et l'autre,
   - des moyens d'échantillonnage (20) opérant d'après ce recalage pour ré-échantillonner un premier des deux jeux de données-image en un troisième jeu de données-image relatif à la même image, et directement superposable échantillon par échantillon au second jeu de données-image, et **caractérisé en ce qu'**il comprend
   - des moyens de traitement (30) opérant à partir des second et troisième jeux de données-image pour en tirer au moins un jeu de données-différence, représentatives de différences entre des zones d'intérêt superposables des images constituées respectivement par lesdits second et troisième jeux de données-image.

2. Dispositif selon la revendication 1, **caractérisé en ce que** les moyens de traitement (30) sont agencés pour déterminer un champ vectoriel de déformation à partir des second et troisième jeux de données-image de manière à permettre la fourniture du jeu de données-différence.

3. Dispositif selon la revendication 2, **caractérisé en ce que** les moyens de traitement (30) comprennent de premiers moyens de calcul (40) propres à appliquer audit champ vectoriel de déformation au moins un premier opérateur pour fournir un jeu de données-différence dit premier jeu de données-différence.

4. Dispositif selon l'une des revendications 2 et 3, **caractérisé en ce que** les moyens de traitement (30) comprennent de seconds moyens de calcul (40) propres à appliquer audit champ vectoriel de déformation un second opérateur, différent du premier opérateur, pour fournir un autre jeu de données-différence dit second jeu de données-différence.

5. Dispositif selon la revendication 3 en combinaison avec la revendication 4, **caractérisé en ce que** les moyens de traitement (30) comprennent de troisièmes moyens de calcul (40) propres à appliquer audit champ vectoriel de déformation un troisième opérateur, composition des premier et second opérateurs pour fournir un autre jeu de données-différence dit troisième jeu de données-différence.

6. Dispositif selon l'une des revendications 3 à 5, **caractérisé en ce que** le premier opérateur est choisi dans un groupe comprenant un opérateur de type norme et un opérateur fondé sur des dérivés partielles.

7. Dispositif selon la revendication 6, **caractérisé en ce que** le second opérateur est choisi dans ledit groupe comprenant un opérateur de type norme et un opérateur fondé sur des dérivés partielles.

8. Dispositif selon l'une des revendications 6 et 7, **caractérisé en ce que** l'opérateur fondé sur des dérivées partielles est de type divergence.

9. Dispositif selon l'une des revendications 6 et 7, **caractérisé en ce que** l'opérateur fondé sur des dérivées partielles est de type jacobien.

**10.** Dispositif selon l'une des revendications 3 à 9, **caractérisé en ce que** les moyens de traitement (30) comprennent des moyens de détection (50) propres à transformer les premier, second et troisième jeux de données-différence en un quatrième jeu de données-image formant une carte.

**11.** Dispositif selon la revendication 10, **caractérisé en ce que** les moyens de détection (50) sont agencés pour permettre la sélection manuelle par un utilisateur, à partir de ladite carte, des zones d'intérêt.

**12.** Dispositif selon la revendication 10, **caractérisé en ce que** les moyens de détection (50) sont agencés pour effectuer une sélection automatique des zones d'intérêt dans ladite carte.

**13.** Dispositif selon la revendication 12, **caractérisé en ce que** la sélection s'effectue par une analyse de type éléments connexes.

**14.** Dispositif selon l'une des revendications 10 à 13, **caractérisé en ce que** les moyens de détection (50) sont propres à déterminer pour chaque zone d'intérêt sélectionnée un contour fermé qui le délimite.

**15.** Dispositif selon la revendication 14, **caractérisé en ce que** les moyens de détection (50) sont propres à attribuer une forme sphérique aux contours fermés des zones d'intérêt sélectionnées.

**16.** Dispositif selon la revendication 14, **caractérisé en ce que** les moyens de détection (50) sont propres à attribuer une forme ellipsoïdale aux contours fermés des zones d'intérêt sélectionnées.

**17.** Dispositif selon l'une des revendications 2 à 16, **caractérisé en ce que** les moyens de traitement (30) comprennent des moyens de quantification (60) propres, à partir du champ vectoriel de déformation et des second et troisième jeux de données-image, à déterminer des données-volume représentatives de différences de type variation de volume, de façon à former ledit jeu de données-différence, lequel est dit alors jeu de données-volume.

**18.** Dispositif selon la revendication 17, **caractérisé en ce que** les moyens de quantification (60) sont agencés pour :

- associer à un contour fermé, représentatif d'une zone d'intérêt, un contour de référence englobant ledit contour fermé,
- décomposer en éléments, à l'aide d'une distribution de points, l'espace contenu dans ledit contour de référence,
- dénombrer les éléments contenus à l'intérieur du contour fermé de la zone d'intérêt,
- appliquer à ladite distribution de points le champ vectoriel de déformation, sans déformer ledit contour fermé de la zone d'intérêt,
- dénombrer les éléments restants à l'intérieur du contour fermé de la zone d'intérêt, et
- effectuer la soustraction entre les deux nombres d'éléments de façon à déterminer les données-volume du jeu de données-volume représentatives des variations volumiques de la zone d'intérêt.

**19.** Dispositif selon la revendication 18, **caractérisé en ce que** les moyens de quantification (60) sont agencés pour attribuer une forme sphérique aux contours de référence des zones d'intérêt.

**20.** Dispositif selon la revendication 19, **caractérisé en ce que** les moyens de quantification (60) sont agencés pour attribuer une forme ellipsoïdale aux contours de référence des zones d'intérêt.

**21.** Dispositif selon l'une des revendications 18 à 20, **caractérisé en ce que** les moyens de quantification (60) sont agencés pour calculer, en chaque zone d'intérêt, une multiplicité de variations volumiques pour des contours de référence, fermés et emboîtés les uns dans les autres, et compris entre un contour assimilable à un point de dimension nulle et le contour de référence choisi, et déterminer à partir de ladite multiplicité de variations volumiques une valeur de variation volumique la plus probable pour chaque zone d'intérêt.

**22.** Dispositif selon l'une des revendication 18 à 21, **caractérisé en ce que** les moyens de quantification (60) sont agencés pour décomposer l'espace à l'aide d'une distribution de points régulière, formant un maillage.

**23.** Dispositif selon l'une des revendications 18 à 21, **caractérisé en ce que** les moyens de quantification (60) sont agencés pour décomposer l'espace de manière stochastique à l'aide d'une distribution de points aléatoire.

**24.** Dispositif selon l'une des revendications 14 à 16 en combinaison avec l'une des revendications 18 à 23, **caractérisé en ce que** les moyens de quantification opèrent sur des contours fermés déterminés par lesdits moyens de détection dans les zones d'intérêt sélectionnées.

**25.** Dispositif selon l'une des revendications 17 à 24, **caractérisé en ce qu'**il comprend des moyens de segmentation (70) propres à fournir audit module de quantification lesdites zones d'intérêt, à partir du second jeu de données-image.

**26.** Dispositif selon l'une des revendications précédentes, **caractérisé en ce que** les images numériques comparables sont des images médicales.

**27.** Dispositif selon la revendication 26, **caractérisé en ce que** les images numériques comparables sont des images médicales tridimensionnelles de régions du cerveau d'un être vivant.

**28.** Dispositif selon l'une des revendications précédentes, **caractérisé en ce que** les zones d'intérêt sont des structures anatomiques évolutives.

**29.** Dispositif selon l'une des revendications 1 à 28, **caractérisé en ce que** les zones d'intérêt sont des lésions évolutives.

**30.** Dispositif selon l'une des revendications précédentes, **caractérisé en ce que** la seconde image est une image déduite de la première image par une symétrie par rapport à un plan.

**31.** Procédé de traitement de deux jeux de données-image représentant respectivement deux images numériques comparables, comprenant les étapes suivantes :

- déterminer une transformation de recalage entre l'une des images et l'autre, à partir des deux jeux de données-image,
- ré-échantillonner un premier des deux jeux de données-image, représentatif de l'image recalée, en un troisième jeu de données-image relatif à la même image et directement superposable échantillon par échantillon au second jeu de données-image, et **caractérisé en ce qu'**il comprend l'étape de
- déterminer a partir des second et troisième jeux de données-image au moins un jeu de données-différence représentatives de différences entre des zones superposables des images constituées respectivement par lesdits second et troisième jeux de données-image.

**Claims**

**1.** Electronic image processing device, intended to accommodate two data-image sets respectively representing two comparable digital images, comprising:

- realignment means (10) suitable, starting from these two data-image sets, for determining a realignment transformation ($T_R$) between one of the images and the other,
- sampling means (20) operating from this realignment in order to resample a first of the two data-image sets forming a third data-image set relating to the same image, and directly superimposable, sample by sample, on the second data-image set, and

**characterized in that** it comprises

- processing means (30) operating from the second and third data-image sets in order to extract at least one data-difference set, data representative of differences between superimposable regions of interest of the images consisting respectively of the said second and third data-image sets.

**2.** Device according to Claim 1, **characterized in that** the processing means (30) are arranged in order to determine a vectorial deformation field from the second and third data-image sets so as to enable the data-difference set to be provided.

**3.** Device according to Claim 2, **characterized in that** the processing means (30) comprise first computing means (40) suitable for applying to the said vectorial deformation field at least a first operator in order to provide a data-difference set called a first data-difference set.

**4.** Device according to one of Claims 2 and 3, **characterized in that** the processing means (30) comprise second computing means (40) suitable for applying to the said vectorial deformation field a second operator, different from the first operator, in order to provide another data-difference set called a second data-difference set.

**5.** Device according to Claim 3 in combination with Claim 4, **characterized in that** the processing means (30) comprise third computing means (40) suitable for applying to the said vectorial deformation field a third operator, made up of the first and second operators, in order to provide another data-difference set called a third data-difference set.

**6.** Device according to one of Claims 3 to 5, **characterized in that** the first operator is chosen from a group comprising an operator of standard type and an operator based on partial derivatives.

**7.** Device according to Claim 6, **characterized in that** the second operator is chosen from the said group comprising an operator of standard type and an operator based on partial derivatives.

**8.** Device according to either of Claims 6 and 7, **characterized in that** the operator based on partial derivatives is of divergence type.

**9.** Device according to either of Claims 6 and 7, **characterized in that** the operator based on partial derivatives is of Jacobian type.

**10.** Device according to one of Claims 3 to 9, **characterized in that** the processing means (30) comprise detecting means (50) suitable for transforming the first, second and third data-difference sets into a fourth data-image set forming a map.

**11.** Device according to Claim 10, **characterized in that** the detecting means (50) are arranged to allow the manual selection by a user, from the said map, of regions of interest.

**12.** Device according to Claim 10, **characterized in that** the detecting means (50) are arranged to carry out automatic selection of regions of interest in the said map.

**13.** Device according to Claim 12, **characterized in that** the selection is carried out by analysis of related-element type.

**14.** Device according to one of Claims 10 to 13, **characterized in that** the detecting means (50) are suitable for determining, for each selected region of interest, a closed contour which delimits it.

**15.** Device according to Claim 14, **characterized in that** the detecting means (50) are suitable for allocating a spherical shape to the closed contours of the selected regions of interest.

**16.** Device according to Claim 14, **characterized in that** the detecting means (50) are suitable for allocating an ellipsoidal shape to the closed contours of the selected regions of interest.

**17.** Device according to one of Claims 2 to 16, **characterized in that** the processing means (30) comprise quantizing means (60) suitable, starting from the vectorial deformation field and second and third data-image sets, for determining data-volumes representative of differences of volume variation type, so as to form the said data-difference set, which is then called a data-volume set.

**18.** Device according to Claim 17, **characterized in that** the quantizing means (60) are arranged in order to:

- combine with a closed contour, representative of a region of interest, a reference contour encompassing the said closed contour,
- break down the space contained within the said reference contour into elements, using a point distribution,

- count the elements contained inside the closed contour of the region of interest,
- apply the vectorial deformation field to the said point distribution, without deforming the said closed contour of the region of interest,
- count the elements remaining inside the closed contour of the region of interest, and
- carry out the subtraction between the two numbers of elements so as to determine the data-volume of the data-volume set which are representative of volume variations in the region of interest.

**19.** Device according to Claim 18, **characterized in that** the quantizing means (60) are arranged in order to allocate a spherical shape to the reference contours of the regions of interest.

**20.** Device according to Claim 19, **characterized in that** the quantizing means (60) are arranged in order to allocate an ellipsoidal shape to the reference contours of the regions of interest.

**21.** Device according to one of Claims 18 to 20, **characterized in that** the quantizing means (60) are arranged in order to compute, in each region of interest, a multiplicity of volume variations for the reference contours, closed and fitted into each other, and included between a contour equivalent to a point of zero dimension and the chosen reference contour, and in order to determine, from the said multiplicity of volume variations, the most probable volume variation value for each region of interest.

**22.** Device according to one of Claims 18 to 21, **characterized in that** the quantizing means (60) are arranged in order to break down the space by means of a regular point distribution, forming a mesh.

**23.** Device according to one of Claims 18 to 21, **characterized in that** the quantizing means (60) are arranged in order to break down the space in a stochastic manner by means of a random point distribution.

**24.** Device according to one of Claims 14 to 16 in combination with one of Claims 18 to 23, **characterized in that** the quantizing means operate on closed contours determined by the said detection means in the selected regions of interest.

**25.** Device according to one of Claims 17 to 24, **characterized in that** it comprises segmentation means (70) suitable for providing the said regions of interest to the said quantizing module, from the second data-image set.

**26.** Device according to one of the preceding claims, **characterized in that** the comparable digital images are medical images.

27. Device according to Claim 26, **characterized in that** the comparable digital images are three-dimensional medical images of regions of the brain of a living being.

28. Device according to one of the preceding claims, **characterized in that** the regions of interest are changing anatomical structures.

29. Device according to one of Claims 1 to 28, **characterized in that** the regions of interest are changing lesions.

30. Device according to one of the preceding claims, **characterized in that** the second image is an image deduced from the first image by symmetry with respect to a plane.

31. Method of processing two data-image sets respectively representing two comparable digital images, comprising the following steps:

    - determining a realignment transformation between one of the images and the other, starting from two data-image sets,
    - resampling a first of the two data-image sets, representative of the realigned image, forming a third data-image set relating to the same image and directly superimposable, sample by sample, on the second data-image set, and **characterized in that** it comprises the step of
    - determining from the second and third data-image sets at least one data-difference set, data representative of differences between superimposable regions of images consisting respectively of the said second and third data-image sets.

**Patentansprüche**

1. Elektronisches Bildverarbeitungsgerät, dazu bestimmt, zwei Bilddatensätze zu empfangen, die jeweils zwei vergleichbare digitale Bilder darstellen, umfassend:

    - Einstellungs- bzw. Neueinstellungseinrichtungen (10), fähig aufgrund dieser beiden Bilddatensätze eine Neueinstellungstransformation ($T_R$) zwischen dem einen und dem anderen der Bilder zu bewirken bzw. zu bestimmen,
    - Abtasteinrichtungen (20), die nach dieser Neueinstellung einen ersten der beiden Bilddatensätze wieder abtasten, mit einem dasselbe Bild betreffenden dritten Bilddatensatz, dem zweiten Bilddatensatz Abtastwert für Abtastwert direkt überlagerbar,

**dadurch gekennzeichnet, dass** es außerdem umfasst:

    - Verarbeitungseinrichtungen (30), fähig aus dem zweiten und dem dritten Bilddatensatz wenigstens einen Satz von Differenzdaten zu erarbeiten, die repräsentativ sind für die Differenzen zwischen überlagerbaren Beobachtungszonen der Bilder, jeweils gebildet durch die genannten zweiten und dritten Bilddatensätze.

2. Gerät nach Anspruch 1, **dadurch gekennzeichnet, dass** die Verarbeitungseinrichtungen (30) fähig sind, ein Verformungsvektorfeld aufgrund des zweiten und dritten Bilddatensatzes zu bestimmen, um die Lieferung des Differenzdatensatzes zu ermöglichen.

3. Gerät nach Anspruch 2, **dadurch gekennzeichnet, dass** die Verarbeitungseinrichtungen (30) erste Recheneinrichtungen (40) umfassen, fähig auf das genannte Verformungsvektorfeld wenigstens einen ersten Operator anzuwenden, um einen Differenzdatensatz zu liefern, erster Differenzdatensatz genannt.

4. Gerät nach einem der Ansprüche 2 und 3, **dadurch gekennzeichnet, dass** die Verarbeitungseinrichtungen (30) zweite Recheneinrichtungen (40) umfassen, fähig auf das genannte Verformungsvektorfeld einen sich von dem ersten Operator unterscheidenden zweiten Operator anzuwenden, um einen weiteren Differenzdatensatz zu liefern, zweiter Differenzdatensatz genannt.

5. Gerät nach Anspruch 3 in Kombination mit Anspruch 4, **dadurch gekennzeichnet, dass** die Verarbeitungseinrichtungen (30) dritte Recheneinrichtungen (40) umfassen, fähig auf das genannte Verformungsvektorfeld einen dritten Operator anzuwenden, zusammengesetzt aus dem ersten und zweiten Operator, um einen weiteren Differenzdatensatz zu liefern, dritter Differenzdatensatz genannt.

6. Gerät nach einem der Ansprüche 3 bis 5, **dadurch gekennzeichnet, dass** der erste Operator ausgewählt wird aus einer Gruppe, die einen Operator des Norm-Typs und einen auf partiellen Abweichungen beruhenden Operator umfasst.

7. Gerät nach Anspruch 6, **dadurch gekennzeichnet, dass** der zweite Operator ausgewählt wird aus der genannten Gruppe, die einen Operator des Norm-Typs und einen auf partiellen Abweichungen beruhenden Operator umfasst.

8.  Gerät nach einem der Ansprüche 6 und 7, **dadurch gekennzeichnet, dass** der auf partiellen Abweichungen beruhende Operator vom Divergenz-Typ ist.

9.  Gerät nach einem der Ansprüche 6 und 7, **dadurch gekennzeichnet, dass** der auf partiellen Abweichungen beruhende Operator vom Jacobideterminanten- bzw. Funktionaldeterminantentyp ist.

10. Gerät nach einem der Ansprüche 3 bis 9, **dadurch gekennzeichnet, dass** die Verarbeitungseinrichtungen (30) Detektionseinrichtungen (50) umfassen, fähig den ersten, zweiten und dritten Differenzdatensatz in einen vierten, eine Karte bildenden Differenzdatensatz umzusetzen.

11. Gerät nach Anspruch 10, **dadurch gekennzeichnet, dass** die Detektionseinrichtungen (50) so eingerichtet sind, dass sie aufgrund der genannten Karte die manuelle Selektion der Beobachtungszonen durch den Benutzer ermöglichen.

12. Gerät nach Anspruch 10, **dadurch gekennzeichnet, dass** die Detektionseinrichtungen (50) fähig sind, eine automatische Selektion der Beobachtungszonen in der genannten Karte durchzuführen.

13. Gerät nach Anspruch 12, **dadurch gekennzeichnet, dass** die Selektion durch eine Analyse des Verwandte-Elemente-Typs erfolgt.

14. Gerät nach einem der Ansprüche 10 bis 13, **dadurch gekennzeichnet, dass** die Detektionseinrichtungen (50) fähig sind, für jede ausgewählte Beobachtungszone eine geschlossene Kontur, die sie umgibt, zu bestimmen bzw. festzulegen.

15. Gerät nach Anspruch 14, **dadurch gekennzeichnet, dass** die Detektionseinrichtungen (50) fähig sind, den geschlossenen Konturen der ausgewählten Beobachtungszonen eine sphärische Form zu verleihen.

16. Gerät nach Anspruch 14, **dadurch gekennzeichnet, dass** die Detektionseinrichtungen (50) fähig sind, den geschlossenen Konturen der ausgewählten Beobachtungszonen eine elliptische Form zu verleihen.

17. Gerät nach einem der Ansprüche 2 bis 16, **dadurch gekennzeichnet, dass** die Verarbeitungseinrichtungen (30) Quantifizierungseinrichtungen (60) umfassen, fähig aus dem Verformungsvektorfeld und dem zweiten und dritten Bilddatensatz Volumendaten zu ermitteln, die repräsentativ sind für Differenzen des Volumenveränderungstyps, um den genannten Differenzdatensatz zu bilden, der dann Volumendatensatz genannt wird.

18. Gerät nach Anspruch 17, **dadurch gekennzeichnet, dass** die Quantifizierungseinrichtungen (60) fähig sind:

    -   einer geschlossenen Kontur, repräsentativ für eine Beobachtungszone, eine Bezugskontur zuzuordnen, die die genannte geschlossene Kontur umgibt,
    -   den in der genannten Bezugskontur enthaltenen Raum mit Hilfe einer Punkteverteilung in Elemente aufzuteilen,
    -   die im Innern der geschlossenen Kontur der Beobachtungszone enthaltenen Elemente zu zählen,
    -   auf die genannte Punkteverteilung das Verformungsvektorfeld anzuwenden, ohne die genannte geschlossene Kontur der Beobachtungszone zu verformen,
    -   die im Innern der geschlossenen Kontur der Beobachtungszone noch vorhandenen Elemente zu zählen, und
    -   die Subtraktion zwischen den beiden Anzahlen von Elementen durchzuführen, um die Volumendaten des Volumendatensatzes zu ermitteln, die repräsentativ sind für die Volumenveränderungen der Beobachtungszone.

19. Gerät nach Anspruch 18, **dadurch gekennzeichnet, dass** die Quantifizierungseinrichtungen (60) fähig sind, den Bezugskonturen der Beobachtungszonen eine sphärische Form zu verleihen.

20. Gerät nach Anspruch 19, **dadurch gekennzeichnet, dass** die Quantifizierungseinrichtungen (60) fähig sind, den Bezugskonturen der Beobachtungszonen eine elliptische Form zu verleihen.

21. Gerät nach einem der Ansprüche 18 bis 20, **dadurch gekennzeichnet, dass** die Quantifizierungseinrichtungen (60) fähig sind, in jeder Beobachtungszone eine Vielzahl von Volumenveränderungen für Bezugskonturen zu berechnen, die geschlossen und ineinander verschachtelt sind und enthalten sind zwischen einer einem Punkt der Dimension null assimilierbaren Kontur und der gewählten Bezugskontur, und fähig sind, aufgrund der genannten Vielzahl von Volumenveränderungen den wahrscheinlichsten Volumenveränderungswert für jede Beobachtungszone zu bestimmen bzw. zu ermitteln.

22. Gerät nach einem der Ansprüche 18 bis 21, **dadurch gekennzeichnet, dass** die Quantifizierungseinrichtungen (60) fähig sind, den Raum mit Hilfe einer gleich- bzw. regelmäßigen, ein Netzwerk bildenden Punkteverteilung aufzuteilen.

23. Gerät nach einem der Ansprüche 18 bis 21, **dadurch gekennzeichnet, dass** die Quantifizierungseinrichtungen (60) fähig sind, den Raum auf stochastische Weise mit Hilfe einer zufälligen Punkteverteilung aufzuteilen.

24. Gerät nach einem der Ansprüche 14 bis 16 in Kombination mit einem der Ansprüche 18 bis 23, **dadurch gekennzeichnet, dass** die Quantifizierungseinrichtungen mit geschlossenen Konturen arbeiten, bestimmt durch die genannten Detektionseinrichtungen, in den ausgewählten Beobachtungszonen.

25. Gerät nach einem der Ansprüche 17 bis 24, **dadurch gekennzeichnet, dass** es Segmentierungseinrichtungen (70) umfasst, fähig aufgrund des zweiten Bilddatensatzes an den genannten Quantifizierungsmodul die genannten Beobachtungszonen zu liefern.

26. Gerät nach einem der vorangehenden Ansprüche, **dadurch gekennzeichnet, dass** die vergleichbaren digitalen Bilder medizinische Bilder sind.

27. Gerät nach Anspruch 26, **dadurch gekennzeichnet, dass** die vergleichbaren digitalen Bilder dreidimensionale medizinische Bilder von Bereichen des Gehirns eines Lebewesens sind.

28. Gerät nach einem der vorangehenden Ansprüche, **dadurch gekennzeichnet, dass** die Beobachtungszonen sich entwickelnde anatomische Strukturen sind.

29. Gerät nach einem der Ansprüche 1 bis 28, **dadurch gekennzeichnet, dass** die Beobachtungszonen sich entwickelnde Schädigungen sind.

30. Gerät nach einem der vorangehenden Ansprüche, **dadurch gekennzeichnet, dass** das zweite Bild ein vom ersten Bild mittels Symmetrie in Bezug auf eine Ebene abgeleitetes Bild ist.

31. Verfahren zur Verarbeitung von zwei jeweils vergleichbare digitale Bilder darstellenden Bilddatensätzen, das die folgenden Schritte umfasst:

    - Bestimmen einer Einstellungs- bzw. Neueinstellungstransformation zwischen den beiden Bildern aufgrund der beiden Bilddatensätze,
    - Wiederabtasten eines ersten der beiden Bilddatensätze, repräsentativ für das neueingestellte Bild, mit einem dasselbe Bild betreffenden dritten Bilddatensatz,

**dadurch gekennzeichnet, dass** es außerdem den folgenden Schritt umfasst:

- aus dem zweiten und dem dritten Bilddatensatz wenigstens einen Satz von Differenzdaten zu ermitteln, die repräsentativ sind für die Differenzen zwischen überlagerbaren Beobachtungszonen der Bilder, die jeweils durch die genannten zweiten und dritten Bilddatensätze gebildet werden.

FIG.1A

FIG.1B

FIG.2A

FIG.2B

FIG.2C

FIG.2D

FIG.3A — DEFORMATION CENTRALE AVEC CHANGEMENT D'INTENSITE → FIG.3B

FIG.4A — DEFORMATION DIFFUSE SANS CHANGEMENT D'INTENSITE → FIG.4B

FIG.5A — TRANSFORMATION AVEC VARIATION D'INTENSITE → FIG.5B

FIG.8

FIG.6

IMAGE 2      IMAGE 1

RECALAGE RIGIDE   10

$T_R$

RE-ECHANTILLONNAGE   20

SEGMENTATION    COMPARAISON     IMAGE 3

70      80

CALCUL DE $\vec{D}$   30   35

$\|\vec{D}\|$, $Div(\vec{D})$, ....   40

DETECTION Z1   50

QUANTIFICATION   60

$\Delta V$

FIG.9

FIG.7

FIG.10

FIG.11